Europäisches Patentamt

(19) European Patent Office

Office européen des brevets

(11) Numéro de publication : **0 286 546 B1**

(12) **FASCICULE DE BREVET EUROPEEN**

(45) Date de publication du fascicule du brevet :
**01.07.92 Bulletin 92/27**

(51) Int. Cl.⁵ : **B23Q 7/14, B23P 21/00,
G05B 19/12, B23Q 41/00**

(21) Numéro de dépôt : **88420075.9**

(22) Date de dépôt : **03.03.88**

(54) **Système de production à dispositif rapide d'amenage et de positionnement à cinématique rectangulaire.**

(30) Priorité : **06.03.87 FR 8703287**
**05.06.87 FR 8707975**
**05.02.88 FR 8801487**

(43) Date de publication de la demande :
**12.10.88 Bulletin 88/41**

(45) Mention de la délivrance du brevet :
**01.07.92 Bulletin 92/27**

(84) Etats contractants désignés :
**CH DE ES FR GB IT LI**

(56) Documents cités :
**EP-A- 0 100 416
WO-A-87/03836
FR-A- 1 579 580
FR-A- 2 106 948
FR-A- 2 572 976
GB-A- 1 267 651
US-A- 4 151 907
US-A- 4 407 404
PATENT ABSTRACTS OF JAPAN, vol. 8, no. 69
(M-286)[1506], 31 mars 1984; & JP-A-58 215 300
(TATEISHI DENKI K.K.) 14-12-1983
PATENT ABSTRACTS OF JAPAN, vol. 9, no.
103 (M-377)[1826], 8 mai 1985; & JP-A-59 227
349 (NICHIDEN KIKAI K.K.) 20-12-1984
SOVIET INVENTIONS ILLUSTRATED, sections
General/Mechanical, résumé no. 86303725/46,
27 novembre 1986, Derwent PublicationsLtd,
Londres, GB; & SU-A-1 219 323 (ELECTRO-
TECH PRODN) 23-03-1986
PATENT ABSTRACTS OF JAPAN, vol. 5, no.
108 (M-78)[780], 14 juillet 1981;& JP-A-56 52
160 (ISUZU JIDOSHA K.K.) 11-05-1981
Idem
PATENT ABSTRACTS OF JAPAN, vol. 7, no. 92
(M-208)[1237], 16 avril 1983; & JP-A-58 15 647
(MITSUBISHI JUKOGYO K.K.)29-01-1983
STEUERUNGSTECHNIK, vol. 6, no. 1, février
1973, pages 11-15, Mainz, DE; J. SARTORIUS:
"Montagemaschinen, ihre Systemauswahlund Steuerungstechnik"**

(56) Documents cités :
**PATENT ABSTRACTS OF JAPAN, vol. 10, no.
354 (P-521)[2410], 28 novembre 1986; & JP-
A-61 152 354 (NEC CORP.) 11-07-1986
PATENT ABSTRACTS OF JAPAN, vol. 4, no.
147 (M-36)[629], 16 octobre 1980; & JP-A-55
100 900 (HITACHI ZOSEN K.K.)01-08-1980**

(73) Titulaire : **MERLIN GERIN
Rue Henri Tarze
F-38050 Grenoble Cédex (FR)**

(72) Inventeur : **Terracol, Claude
MERLIN GERIN Service Brevets
F-38050 Grenoble Cédex (FR)**

(74) Mandataire : **Kern, Paul
Merlin Gerin Sce. Brevets 20, rue Henri Tarze
F-38050 Grenoble Cédex (FR)**

## Description

L'invention est relative à un système de production à dispositif rapide d'amenage, de positionnement et d'enlèvement de produits pour des équipements automatisés desservis par des convoyeurs de transfert libre, notamment un convoyeur amont et un convoyeur aval, entre lesquels est inséré ledit dispositif d'amenage, de positionnement et d'enlèvement, qui comporte un support mobile actionné par un mécanisme d'actionnement à moteur électrique d'entraînement, pour effectuer un cycle rectangulaire à pas de pèlerin, comprenant une course verticale de prise en charge du produit à traiter, amené à un rythme aléatoire par le convoyeur amont, une course horizontale d'amenée du produit, une course verticale de positionnement du produit en un emplacement prédéterminé de traitement et une course horizontale de retour, ledit mécanisme d'actionnement comportant des cames de transformation du mouvement rotatif du moteur en des mouvements linéaires correspondant auxdites courses verticale et horizontale, ledit système comportant de plus plusieurs dispositifs de manipulation pour effectuer des insertions, des opérations ou des traitements sur le produit positionné par ledit dispositif d'amenage, de positionnement et d'enlèvement, successivement en regard desdits dispositifs de manipulation.

Le document WO-A-87.03836, publié après la date de priorité de la présente demande (l'état de la technique selon l'article 54, paragraphe 3), décrit un système du genre mentionné, ayant plusieurs postes de travail alimentés par un dispositif d'amenage à pas de pèlerin. Ce système ne prévoit pas de flexibilité ni d'adaptation des postes de travail aux cadences du dispositif d'amenage.

La présente invention à pour objet de permettre la réalisation d'un système de production fonctionnant à cadences élevées et ayant une grande flexibilité.

Cet objet est réalisé par la mise en oeuvre des caractéristiques mentionnées dans la revendication 1.

L'emploi d'un manipulateur à cames permet une amélioration de la cadence de l'ensemble, et en prévoyant une séparation mécanique entre le mécanisme à cames du dispositif d'amenage et des mécanismes à cames des manipulateurs il est possible d'adapter rapidement le fonctionnement de chaque manipulateur au type de produit fabriqué, et d'assurer une grande flexibilité. Le système électrique ou électronique de pilotage assure la synchronisation des différents mécanismes.

Le support mobile à pas de pélerin effectue simultanément l'opération d'amenage d'un produit à traîter et l'opération d'enlèvement d'un produit traité, ce dernier étant déposé sur le convoyeur aval.

L'entraînement du support mobile est réalisé par des cames commandées par un moteur unique qui commande les mouvements verticaux et les mouvements horizontaux. La synchronisation est réalisée par les techniques usuelles bien connues des spécialistes. Le cycle rectangulaire du support mobile présente une position d'attente, dans laquelle le mouvement s'arrête si l'approvisionnement d'une nouvelle palette par le convoyeur amont n'a pas été fait en temps voulu. Cette position d'attente correspond au point d'entrée du système et le démarrage du cycle est par exemple piloté par un détecteur de présence d'un produit à l'emplacement de prise en charge. Le manipulateur est synchronisé avec le dispositif d'amenage et de positionnement, par des moyens électriques ou électroniques bien connus des spécialistes.

La synchronisation électrique entre le dispositif d'amenage et le ou les dispositifs de manipulation permet d'éviter l'obligation de faire fonctionner simultanément tous ces dispositifs de façon systématique et de réaliser un poste d'assemblage flexible. Le besoin de flexibilité se traduit par le fait que les palettes se présentant sur le convoyeur d'amenée peuvent porter des produits différents, ou des variantes différentes d'un produit, ce qui revient au même, et que le traitement doit être adapté au type de produit.

Selon un développement de l'invention le système de pilotage du fonctionnement de chaque dispositif de manipulation est agencé pour commander le fonctionnement du dispositif de manipulation lorsqu'un produit ou une palette portant le produit se présente devant lui, seulement si la variante de produit concerne ledit dispositif de manipulation.

Les palettes, ou les produits eux-mêmes, portent un codage permettant l'identification automatique du produit ou de la variante par un capteur d'un type connu en soi, placé à l'amont du poste. Dans le cas où le nombre de variantes devant recevoir un traitement différent est égal à n, ce qui motive la présence de n dispositifs de manipulation, il est possible d'affecter chacun de ces dispositifs à une des variantes de produit à traiter.

L'identité de toute variante identifiée est avantageusement mise en mémoire dans le système de pilotage de l'ensemble, par exemple un automate programmable, et on peut suivre cette variante pendant son passage sur les n positions du dispositif d'amenage, et ne déclencher au moment voulu que le dispositif de manipulation qui la concerne, les autres étant laissés au repos quand ladite variante se présente devant eux. On réalise bien ainsi un système flexible, dans la mesure ou chaque variante reçoit le traitement spécifique qu'elle réclame, et ceci sans qu'il soit nécessaire de procéder à aucune modification ou réglage du système.

Une utilisation plus complexe d'un dispositif à n manipulateurs est possible en mixant les deux possibilités dont on dispose, en l'occurrence, effectuer plusieurs opérations successives sur le même produit et effectuer des opérations différentes sur des produits différents.

Ayant par exemple trois produits différents à traiter, comportant chacun deux opérations successives, on peut alors affecter deux manipulateurs à chaque produit, et les faire fonctionner chaque fois que ce produit se présente devant eux, chacun d'eux étant chargé d'une des deux opérations. On peut ainsi généraliser théoriquement à un nombre quelconque de produits et d'opérations mais on est limité en ce qui concerne l'augmentation du nombre n par des considérations d'ordre pratique, notamment la difficulté mécanique à réaliser un dispositif à pas de pèlerin très long, le problème de cumul d'aléas et le problème d'accès pour les opérations de maintenance. L'optimisation du nombre n est l'un des problèmes fondamentaux qui se pose au concepteur.

Il peut également se faire que deux ou plusieurs variantes présentent certaines opérations communes auquel cas le où les manipulateurs affectés à ces opérations interviendront sur l'ensemble de ces variantes.

Pour un assemblage automatique à très grande cadence, il convient de limiter la brutalité de l'accostage des palettes par le support mobile et de la dépose de ces mêmes palettes sur le support fixe. D'autres points critiques peuvent apparaître en fin de montée du support mobile et en début de descente, si les accélérations verticales sont mal contrôlées : en effet, contrairement à de nombreux autres objets pouvant être véhiculés par ce genre de dispositif, un produit en cours d'assemblage doit être manipulé avec certaines précautions, du fait qu'il peut contenir des composants qui n'ont pas encore reçu leur fixation définitive, et dont le positionnement peut être perturbé par des chocs ou des accélérations verticales excessives.

Selon un mode de mise en oeuvre, connu en soi, par le document Patent Abstracts of japan Vol.9, n°103 (M-377) (1826) 08.05.85 JP-A-59227349 les accélérations et décélérations du support mobile pendant la course verticale ascendante de prisai en charge du produit, et la course verticale descendante de positionnement du produit, sont modulées de façon à limiter les chocs exercés sur le produit et susceptibles de déplacer les composants du produit en cours d'assemblage.

Selon un premier principe de mise en oeuvre de l'invention, on admet que les courses horizontales et verticales se succèdent sans chevauchement. Les cinq phases de la course verticale doivent donc prendre place dans le temps dévolu à celle-ci, ce temps étant forcément limité pour en laisser suffisamment aux courses horizontales. Les accélérations et décélérations verticales ne pouvant être très élevées, il s'ensuit une limitation dans la recherche de l'avantage recherché, à savoir une phase intermédiaire à vitesse modérée.

Un progrès important peut être apporté par un deuxième principe de mise en oeuvre de l'invention, qui consiste à créer des zones de chevauchement entre les courses horizontales et verticales. Dans la mesure où il est nécessaire d'assurer une course verticale utile pure, c'est-à-dire sans déplacement horizontal simultané, pour assurer un engagement et un dégagement correct des pions de centrage, les zones de chevauchement pourront être obtenues en faisant apparaître des surcourses verticales de part et d'autre de la course verticale utile. On aboutit donc à une course verticale totale augmentée, ce qui n'est pas un inconvénient en soi.

Par contre, la durée totale des courses verticales peut être également sensiblement augmentée, ce qui ouvre des possibilités intéressantes de configuration du diagramme espace-temps de ces courses, en obtenant des phases intermédiaires plus longues, donc présentant une vitesse plus réduite, ceci tout en respectant les accélérations et décélérations acceptables.

D'autres avantages ressortiront plus clairement de la description qui va suivre de différents modes de mise en oeuvre de l'invention donnés à titre d'exemples non limitatifs et représentés aux dessins annexés dans lesquels :

— la figure 1 est une vue schématique en élévation d'un poste de travail d'un système de production selon l'invention, le dispositif d'amenage étant représenté en position d'attente P1;

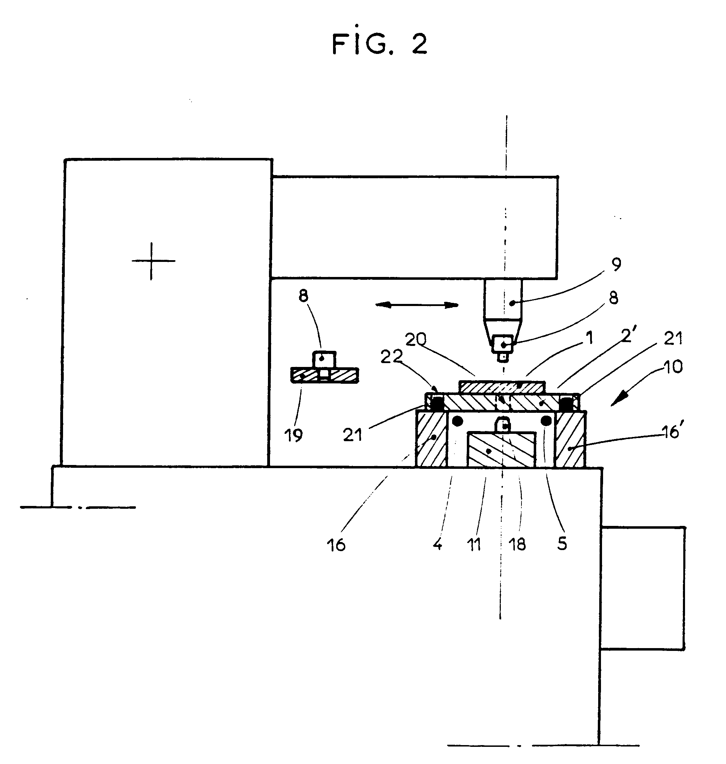

— la figure 2 est une vue en coupe partielle selon la ligne II.II de la figure 1;
— la figure 3 est une vue analogue à celle de la figure 1, montrant le dispositif en fin de course d'amenage (position P3);
— la figure 4 illustre schématiquement le mouvement à pas de pèlerin du dispositif d'amenage;
— la figure 5 représente le diagramme des mouvements respectifs;
— la figure 6 est une vue en plan d'un système de production à plusieurs postes de travail successifs;
— la figure 7 est une vue partielle de la figure 1, à échelle agrandie illustrant les positions relatives des différents éléments;
— la figure 8 est une vue en élévation des pions de centrage;
— la figure 9 représente le diagramme espace-temps du support mobile pendant la course verticale de prise en charge, dans un dispositif conventionnel;
— la figure 10 est une vue analogue à celle de la figure 9 d'un dispositif selon le premier principe de mise en oeuvre de l'invention;
— la figure 11 est une vue analogue à celle de la figure 10 d'une variante de réalisation selon le deuxième principe de mise en oeuvre de l'invention;

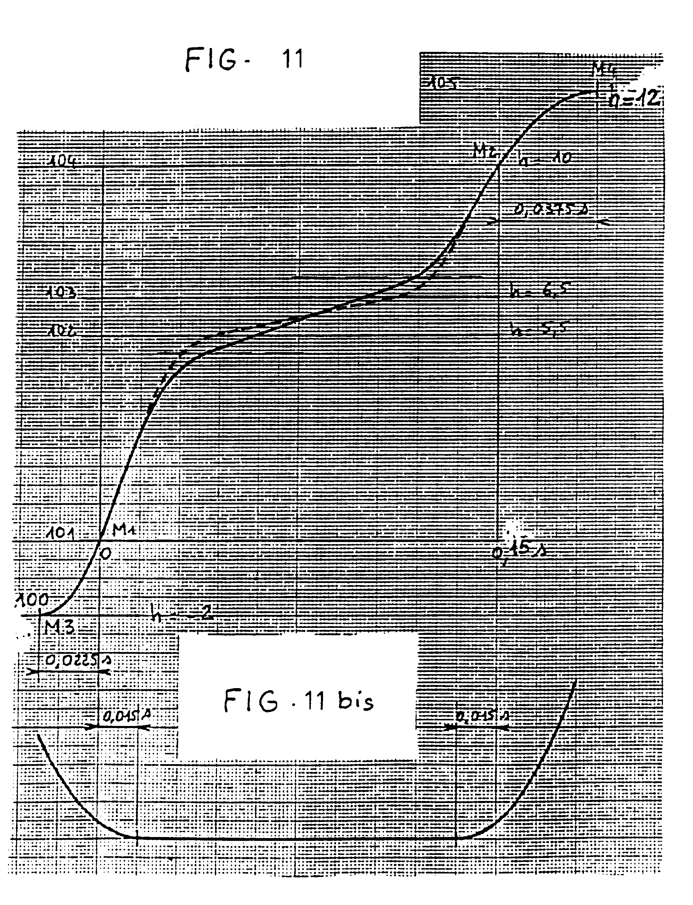

– la figure 11 bis est la courbe espace-temps du début et de la fin du mouvement horizontal selon une autre variante de l'invention;

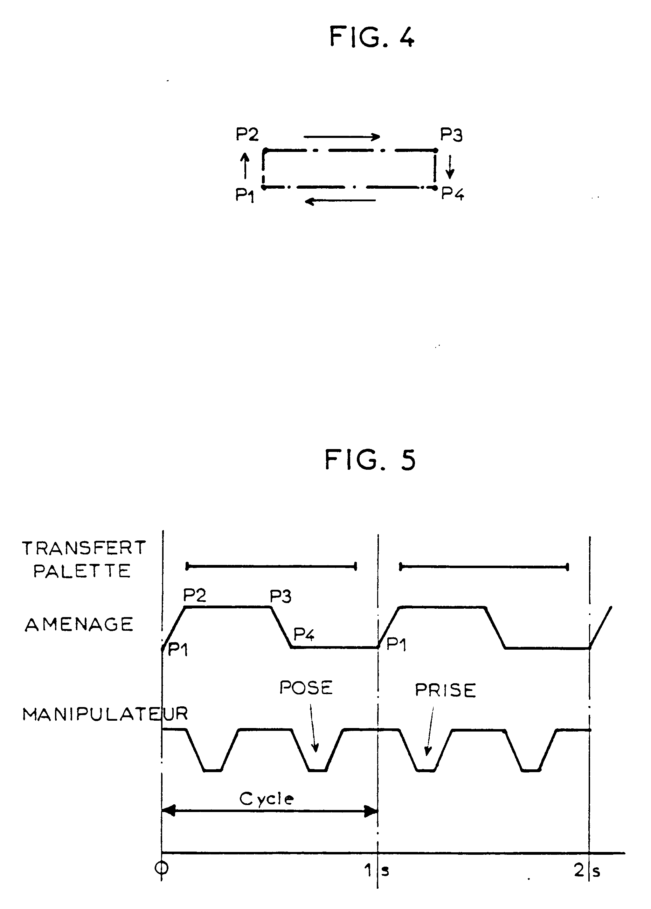

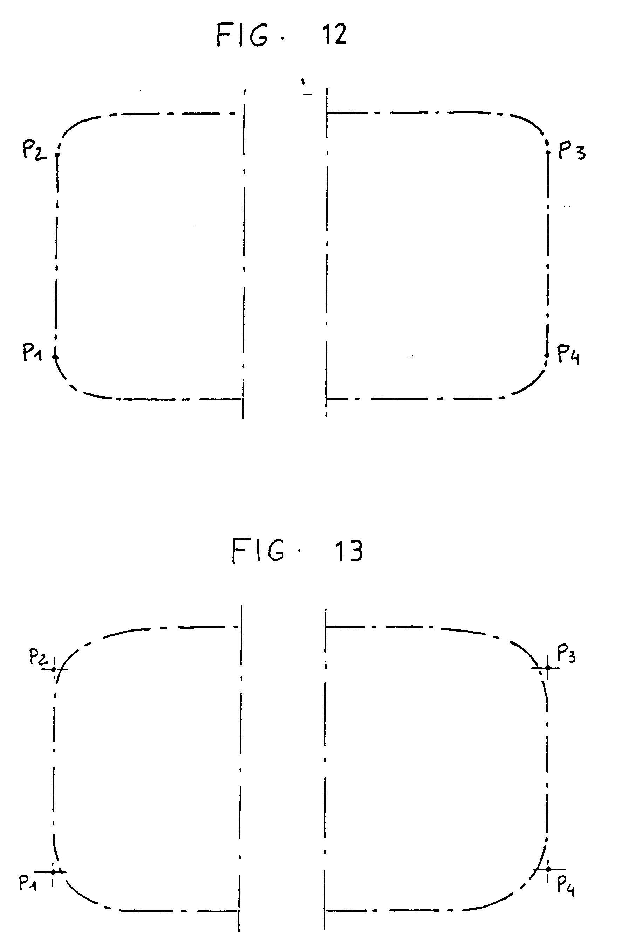

– la figure 12 est une vue analogue à celle de la figure 4 à échelle agrandie illustrant la variante selon la figure 11;

– la figure 13 est une vue analogue à celle de la figure 12 illustrant une autre variante.

Sur les figures un produit 1 est positionné sur un outillage ou une palette 2 transportée par un convoyeur 3, par exemple constitué par deux courroies 4,5 parallèles et entraînées en synchronisme par un moteur approprié. Le convoyeur coopère avec un dispositif désigné par le repère général 6, d'amenage, de positionnement et d'enlèvement du produit 1 d'un poste de travail équipé d'un manipulateur 9. Le dispositif 6 prend en charge la palette 2 en un emplacement prédéterminé 7, défini par une butée 15 interférant avec le convoyeur 3, et l'amène en une position de travail 10 précédemment occupée par la palette 2'. Après traitement du produit 1, par exemple montage d'un composant 8 par le manipulateur 9, il enlève la palette 2' pour la déposer sur le convoyeur 3 en aval du poste de travail. Ces opérations successives sont réalisées par un support mobile 11 animé d'un mouvement du type à pas de pèlerin constitué par un cycle rectangulaire, représenté schématiquement par la figure 4. Les points P1,P2,P3,P4, sont les quatre sommets du cycle, entre lesquels les mouvements, de type rectiligne, sont :

P1 P2 : montée;

P2 P3 : amenage - transfert;

P3 P4 : descente;

P4 P1 : retour.

Le support mobile 11 animé de ce cycle est un bloc actionné par un dispositif mécanique non représenté, contenu dans un châssis 12, et entraîné par un moteur 13. Le dispositif mécanique de préférence est à deux cames, d'un type connu en soi, et dont les détails ne seront pas reproduits ici. D'une manière analogue le manipulateur 9, comporte également des cames et un moteur 14 d'actionnement. La différence essentielle entre les deux appareils réside dans le cycle, qui est de type rectangulaire fermé pour l'amenage, et de type U inversé pour le manipulateur 9 qui prend le composant 8 d'un dispositif d'alimentation 19 pour le déposer sur le produit 1.

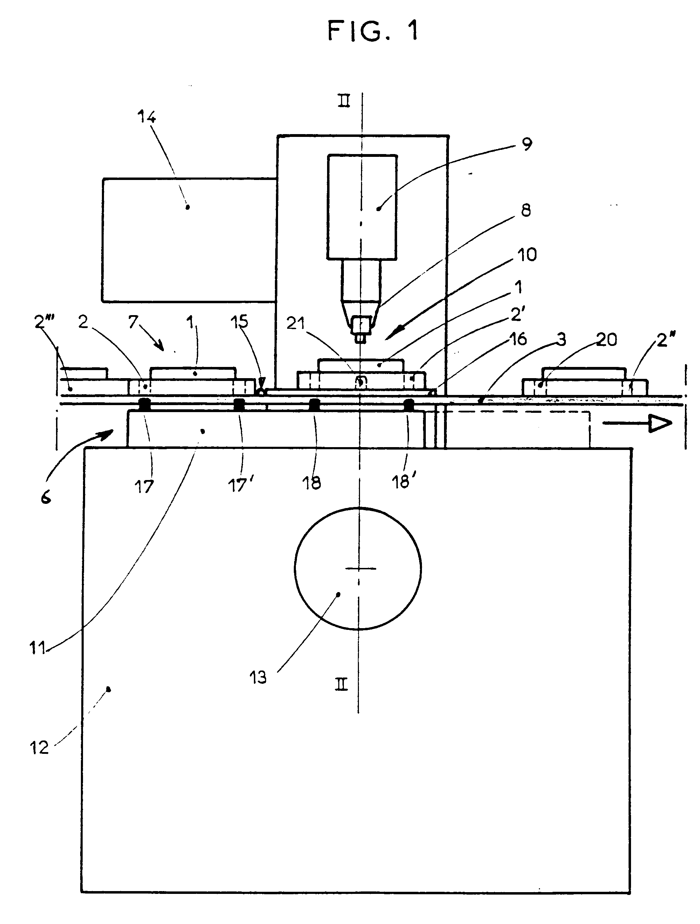

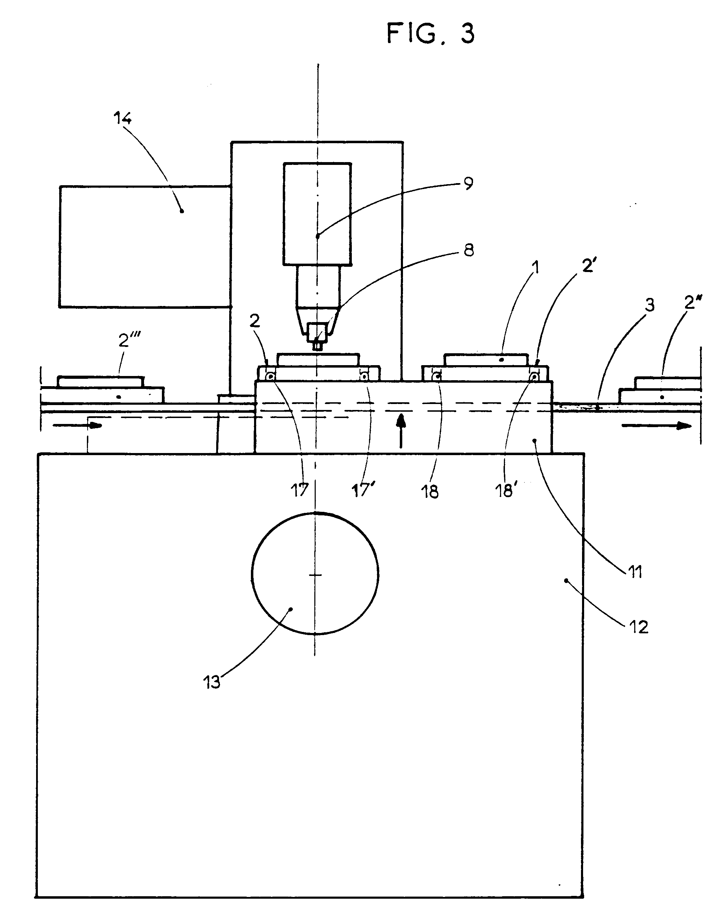

Le support mobile 11 porte des pions 17',17"; 18,18 susceptibles de pénétrer dans des trous conjugués 20 des palettes 2 pour centrer et positionner ces dernières sur le support 11. La longueur du support mobile 11 correspond à l'écartement entre la position de prise en charge 7 et la position de travail 10, de manière à coopérer simultanément avec deux palettes 2,2'. La position de travail 10 est définie par deux longerons 16,16' qui encadrent les courroies 4,5 et sur lesquels la palette 2' est posée (pour la clarté des dessins, le longeron 16' n'est pas représenté sur les figures 1 et 3). La face supérieure d'appui des longerons 16,16' est plus haute que les courroies 4,5 et elle porte des pions 21 qui pénètrent à faible jeu dans des trous conjugués 22 de la palette 2' pour positionner cette dernière.

Le dispositif fonctionne de la manière suivante :

La palette 2, amenée par le convoyeur 3, vient s'immobiliser contre la butée 15. Cette dernière sera réalisée préférentiellement dans un matériau à forte hystérésis mécanique, de manière à minimiser le phénomène de rebondissement. Au moment où la palette 2 arrive en butée, le support mobile ou bloc 11 se trouve en position P1, c'est à dire celle qui est dessinée sur la figure 1. C'est l'arrivée de la palette 2 qui, au moyen d'un capteur quelconque, par exemple optique, va déclencher une rotation élémentaire du dispositif mécanique actionné par le moteur 13, c'est à dire un cycle complet du pas de pèlerin. Au cours de ce cycle se dérouleront les opérations suivantes :

– montée P1,P2 : le bloc 11 vient prendre en charge la palette 2, avec positionnement précis par les pions 17,17'. La palette 2 est soulevée à une hauteur suffisante pour échapper la butée 15. Au cours du même mouvement, si une palette précédente 2' se trouvait au point de travail sous le manipulateur 9, elle est également soulevée par les pions 18,18', à une hauteur suffisante pour permettre son évacuation. (figure 3)

– Amenage - transfert P2,P3 : Pendant cette course du bloc 11, la palette 2 est amenée à la verticale du point de travail, où se trouvait précédemment la palette 2'. Cette dernière est amenée dans la zone aval, où elle pourra être redéposée sur le convoyeur 3.

– Descente P3,P4 : La palette 2 est déposée sur les longerons fixes 16,16', avec positionnement précis par les pions 21. Elle se trouve alors au point de travail 10, et prête pour l'opération prévue, par exemple ici l'insertion du composant 8 par le manipulateur 9. Au cours du même mouvement, la palette 2' est déposée sur le convoyeur 3 et commence son mouvement d'évacuation.

– Retour P4,P1 : Le bloc 11 vient se remettre en position initiale P1, prêt pour un nouveau cycle. Ce cycle pourra débuter si la nouvelle palette 2''', qui était en attente en amont de 2, se présente à son tour contre la butée 15. Elle a disposé pour ce faire de l'ensemble du cycle du bloc 11, à l'exclusion de la première phase P1,P2. Si le système est correctement harmonisé, le transfert de la palette 2''' prendra à peu près le même temps que le cycle de 11, avec une tolérance dans un sens ou dans l'autre. Si le bloc 11 est le plus rapide, il devra attendre un bref instant en position P1 l'arrivée en butée de la palette 2'''. Dans le cas contraire, la palette 2''' sera en butée avant la fin du cycle de 11. Il ne sera alors pas necessaire de marquer l'arrêt en P1, et la rotation du moteur 13 sera continue, tant que de nouvelles palettes arriveront. Cette solution est plus favorable sur le plan mécanique.

Notons également qu'il est inutile de prévoir un dispositif de retenue de palette en amont, puisque la butée 15 n'est pas escamotable, et qu'on peut très bien admettre le frottement entre les palettes 2 et 2''' pendant la phase montée du bloc 11. Si les palettes ont une longueur de 100 mm, le temps de transfert sera strictement limité à une avancée de 100 mm du convoyeur, soit 0,6 secondes si la vitesse est de 10 m/mn. Du côté aval, dès qu'une palette 2'' est déposée sur le convoyeur 3 lors de la phase descente du bloc 11, cette palette commence à s'évacuer à la vitesse du convoyeur. Quand le bloc 11 sera revenu en position initiale P1, elle sera en cours d'évacuation, mais pas encore dégagée complètement, quand la palette 2' sera à son tour prise en charge par le bloc 11 et transférée vers la droite, elle va tendre à rattraper la palette 2". Bien entendu, il faut que le rattrapage ne soit pas complet, pour éviter un choc entre 2' et 2". Cet impératif peut être observé par un temps de transfert par le convoyeur 3 légèrement inférieur au cycle du bloc 11, ce qui va dans le sens de la 2ème solution citée plus haut, et de la non-interruption du moteur 13 . Dans la description précédente, le convoyeur 3 est intercalé entre les longerons 16,16' et le bloc 11 passe entre les deux courroies 4,5 du convoyeur, mais il est clair que toute autre disposition peut être envisagée sans sortir du cadre de l'invention. On peut par exemple interrompre le convoyeur 3 en le divisant en un tronçon amont et un tronçon aval, avec des poulies de renvoi placées de part et d'autre du support fixe constitué par les longerons 16,16'. On évite ainsi la cohabitation dans une même zone de ce support 16,16' du bloc 11, et du convoyeur 3, ce dernier n'ayant pas d'utilité dans cette zone. On peut également limter le convoyeur 3 à un tronçon réduit correspondant sensiblement à la largeur du châssis 12, ce tronçon se raccordant en amont et en aval à un autre type de convoyeur. Cette solution présente l'avantage de pouvoir choisir pour le transfert entre postes un autre type de convoyeur que celui desservant le poste lui-même, ce qui impose moins de contraintes au concepteur.

Par la suite le système est examiné sous l'angle de la synchronisation. Le cycle est analysé sur le diagramme de la figure 5. Il commence par la montée du bloc 11 (P1 P2; durée estimée = 0,15). A partir de là on initialise simultanément, le transfert horizontal du bloc 11 (P2 P3; durée estimée = 0,35) qui amène la palette 2 à la verticale du point de travail 10 et le transfert - palette, à savoir le remplacement de la palette 2 par la palette 2''' au moyen du convoyeur 3. La durée estimée de ce transfert est de 0,6s, correspondant à une vitesse du convoyeur de 10 m/mn et à un déplacement de 100 mm égale à la longueur de la palette.

Après le transfert horizontal du bloc 11, celui-ci effectue sa descente (P3 P4; durée estimée = 0,15) au cours de laquelle il dépose la palette 2 sur le support 16. A partir de là, on initialise le retour horizontal du bloc 11 (P4 P1; durée estimée = 0,35) et le cycle "pose" du manipulateur (descente, dépose, remontée; durée estimée = 0,25s).

Dans l'exemple décrit ci-dessus, on constate que la durée du cycle est conditionnée par l'amenage qui à une période de 1s et quand le bloc 11 revient en position initiale P1, la nouvelle palette 2''' est déjà en butée depuis 0,15. Le mécanisme d'amenage n'aura donc pas à marquer d'arrêt, conformément à ce qui a été dit plus haut.

Quand au manipulateur il n'y a aucune difficulté à placer l'ensemble de son cycle en 1s, et la cadence est donc de 3600 cycles/heure. Le chiffre est donné à titre d'exemple et il peut vraisemblablement être encore amélioré.

Un important problème concerne la synchronisation manipulateur-amenage qui peut être réalisée par des moyens électriques connus. Le manipulateur et l'amenage sont par exemple équipés chacun d'un moteur pas à pas ou d'un moteur à courant continu associé à des codeurs de position. Avec certaines précautions l'emploi de moteurs à courant alternatif peut également être envisagé.

La solution électrique présente l'avantage de supprimer la liaison mécanique entre les 2 appareils, qui deviennent des composants physiquement bien distincts. L'un des appareils peut être en mouvement alors que l'autre reste immobile et il est possible de faire fonctionner plusieurs manipulateurs sur un amenage unique, celui-ci desservant plusieurs points de travail successifs sans dépose intermédiaire sur le convoyeur, à la manière d'un transfert rigide.

La synchronisation des 2 appareils doit être relativement rigoureuse, notamment pendant la phase "pose", avec une légère tolérance ne risquant pas de compromettre le bon déroulement de l'insertion. On peut voir par exemple sur le diagramme de la figure 5 que, la position d'attente de l'amenage étant P1, celle du manipulateur sera une position située quelque part sur la course du retour. On a vu que cette position d'attente permet au système de s'immobiliser après prise en charge d'une palette, si la suivante n'arrive pas immédiatement. Un problème similaire n'est pas à exclure du côté de la distribution des composants 8. En effet, si après enlèvement d'un composant celui-ci n'est pas remplacé par un autre dans un délai normal, le système a intérêt à rester en position d'attente jusqu'au rétablissement de l'alimentation. Il ne servirait en effet à rien d'amener une palette en position de travail si on n'a pas de composant à lui apporter.

En conséquence, à chaque passage du système au point d'attente, il faut autoriser le démarrage du cycle suivant si les 2 conditions suivantes sont remplies.

— présence d'une palette en attente contre la butée 15

— présence d'un composant 8 prêt à être saisi.

Ces deux conditions peuvent être vérifiées par des capteurs d'un type connu en soi et communiquées au dispositif électronique de pilotage du système.

Ce dispositif électronique ne sera pas décrit ici, les fonctions à assurer étant du même ordre que celles se rencontrant couramment en robotique ou sur les machines à commande numérique.

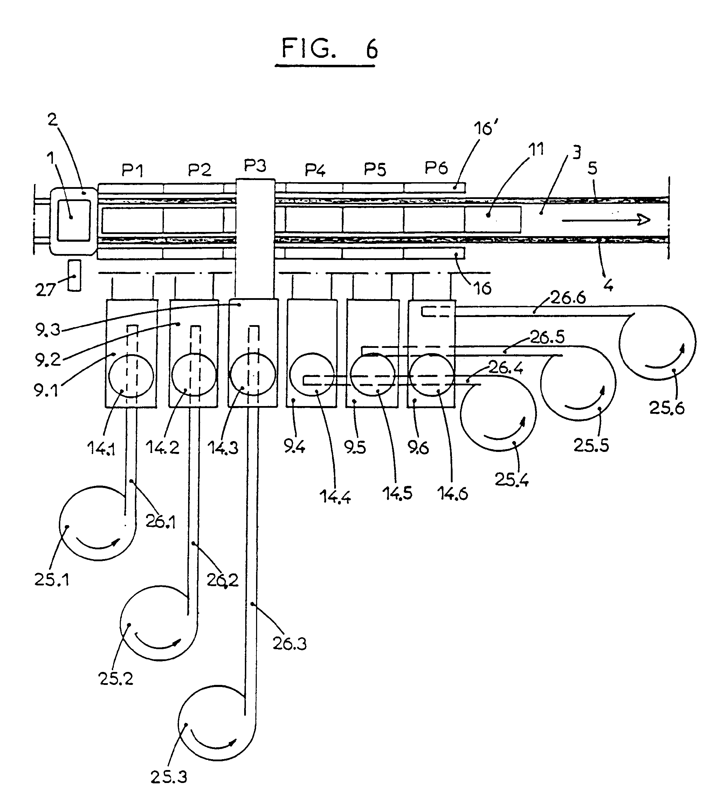

En se référant à la figure 6 on voit un bloc mobile 11, qui est allongé et comporte sept emplacements de palettes 2, ce qui signifie que le nombre maximum de postes de travail pouvant être desservis est égal à six. Le bloc 11 est représenté en position aval du cycle à pas de pèlerin. La longueur des supports fixes 16, 16′ correspond au nombre desdites positions de travail, numérotées de P1 à P6. En regard de chaque position de travail est disposé un dispositif de manipulation 9.1 à 9.6. Il convient de noter que ces dispositifs de manipulation ou appareils doivent s'inscrire dans un encombrement en largeur inférieur au pas du dispositif d'amenage, ce qui explique la disposition dans le plan vertical de leurs moteurs d'entraînement 14.1 à 14.6. Pour la clarté du dessin, seul le dispositif de manipulation 9.3 est représenté en entier, les cinq autres étant représentés partiellement.

Une palette 2 portant un type de produit 1 à traiter est représentée, en position d'attente adjacente au poste P1, prête à être prise en charge par le bloc mobile 11 au cours du cycle à pas de pèlerin. A chaque dispositif de manipulation 9.1 à 9.6 est associé un dispositif d'alimentation, représenté par des bols vibrants 25.1 à 25.6 prolongés par des rails 26.1 à 26.6 permettant d'amener en position de prise les composants à insérer. Pour illustrer deux dispositions possibles, trois des rails 26.1 à 26.3 ont été placés longitudinalement, et trois autres 26.4 à 26.6 transversalement par rapport aux manipulateurs 9.1 à 9.6. Bien entendu, tout autre type de système de distribution ou toute autre disposition peut être envisagé sans sortir du cadre de l'invention.

Un capteur 27, placé en regard de la palette 2 en position d'attente, est conçu pour identifier la variante portée par la palette. Le capteur 27, par exemple optique, lit un code porté par le produit 1 ou la palette 2 et envoie ses informations au dispositif de pilotage de l'ensemble, qui peut être un automate programmable (non représenté). Cet automate reçoit les autres données, notamment de position du bloc 11, de présence d'une palette 2 et de composants à insérer et envoie à son tour en temps voulu des ordres de fonctionnement aux différents manipulateurs 9.1 9.6.

Lorsque chaque variante de produit subit un seul traitement, le dispositif selon la figure 6 peut traiter six variantes 1.1 à 1.6 de produit. La variante 1.1 est par exemple traitée au poste de travail P1, l'automate programmable commandant le dispositif de manipulation 9.1 au premier cycle d'amenage à pas de pèlerin du bloc 11, amenant le produit 1.1 à l'emplacement P1. Les autres dispositifs de manipulation 9.2 à 9.6 restent inactifs lorsque le produit 1.1 vient par la suite à leurs postes de travail P2 à P6. D'une manière analogue, si on considère par exemple que le produit présent en face du capteur 27 est à traiter par le manipulateur 9.3, le système de pilotage réagira en envoyant à celui-ci une impulsion lui permettant d'effectuer un cycle quand la palette 2 se présentera devant lui. Par contre, les autres manipulateurs restent inactifs au passage de cette palette.

Le système de sécurité précité à propos de la distribution des composants doit évidemment être conservé ici, à savoir que, si lorsque la palette 2 se trouve en face du manipulateur 9.2, le composant devant être inséré ne se trouve pas en position sous le manipulateur 9.3, le système doit s'immobiliser en position d'attente jusqu'à ce qu'il soit remédié à cette anomalie.

Si une variante par exemple la variante 1.1 reçoit deux traitements successifs, ceux-ci seront effectués par deux dispositifs de manipulation par exemple 9.1 et 9.2 ou toute autre combinaison. Le nombre de postes de travail devra bien entendu être adapté au nombre d'opérations et au nombre de variantes.

L'association de plusieurs postes de travail à un dispositif d'amenage unique à pas de pèlerin et le pilotage automatique des différentes opérations assurent une flexibilité sans complication notable du système. La commande à pas de pèlerin est intégralement conservée, seule la longueur du bloc mobile 11 étant augmentée.

Il est à noter que, dans la configuration présentée, le plan de pose du support 16 doit être légèrement surélevé par rapport au convoyeur 3 pour éviter un contact intempestif de celui-ci avec la ou les palettes en position de travail. Ce décalage serait inutile soit si le convoyeur était interrompu dans la zone de travail, c'est-à-dire si on avait deux convoyeurs distincts pour l'alimentation et l'évacuation, soit si le convoyeur était simplement abaissé dans la zone de travail, par exemple par un jeu approprié de poulies de renvoi. Les solutions entraînent une légère complexité mécanique complémentaire, mais qui peut se justifier dans la mesure où la suppression du décalage permet une amélioration complémentaire importante du diagramme espace-temps. En référence à la figure 5 sur laquelle, à titre d'exemple, le cycle de l'équipement a été pris égal à une seconde, il apparait qu'une optimisation du cycle peut être obtenue par une répartition appropriée de ce cycle entre les quatre phases prédécrites du cycle rectangulaire de l'amenage.

La première contrainte à satisfaire est de laisser au dispositif actif le temps d'effectuer son intervention, en l'occurrence l'opération de pose s'il s'agit d'un manipulateur d'insertion. Or, cette intervention se fait obligatoirement pendant la phase P4 → P1 qui correspond au retour à vide du support mobile alors que la palette 2 se trouve en position de travail. La phase P4 → P1 ne doit donc pas être trop courte.

Le temps restant (de P1 à P4) est à répartir au mieux entre la montée, le transfert et la descente. Si on considère que la course horizontale "a" est nettement plus importante que la course verticale "h", il semble logique d'affecter beaucoup plus de temps au transfert qu'à la montée et à la descente. La présente invention est basée sur la constatation que c'est au cours de la montée et de la descente que l'on rencontre les chocs et les accélérations verticales les plus dangereux pour la tenue du produit et l'invention consiste à favoriser les mouvements de montée et de descente.

A titre d'exemple, on peut admettre les durées suivantes :

– 0,35 s pour les courses horizontales d'environ 150 mm

– 0,15 s pour les courses verticales d'environ 10 mm.

Cette répartition avantage sensiblement les courses verticales, tout en n'entraînant pas d'accélérations horizontales excessives, et en laissant au manipulateur un temps suffisant pour son intervention.

En analysant maintenant les courses verticales, en commençant par la montée P1 → P2, d'amplitude h, on peut observer que la cote h se compose de la somme des cotes suivantes :

– hauteur des pions 17, 17'.

– le mobile étant en P1, jeu entre le sommet des pions 17, 17' et le plan du convoyeur.

– décalage entre le plan du convoyeur et le plan de pose du support fixe 16 (si ce décalage existe).

– hauteur des pions 21, 21".

– jeu entre le sommet des pions 21, 21' et le plan horizontal où évolue la base des palettes qui constitue le plan actif du mobile 11 pendant la phase de transfert.

Toujours à titre d'exemple, on peut admettre pour ces différentes cotes les valeurs suivantes :

– pions 17, 17' : 4,5 mm

– jeu au dessus de ces pions : 1 mm

– décalage convoyeur - support fixe : 1 mm

– pions 21, 21' : 3 mm

– jeu au dessus de ces pions : 0,5 mm

Ce qui donne un total de 10 mm.

Ces valeurs appellent les commentaires suivants :

– la différence entre les pions 17, 17' et 21, 21' s'explique par le fait que les premiers ont à prendre en charge la palette alors qu'elle est en butée sur le convoyeur, c'est-à-dire positionnée de façon imprécise. Les pions 17, 17' doivent donc présenter des entrées coniques importantes, ce qui nécessite une certaine hauteur. Au contraire, les pions 21, 21' sont abordés par la palette alors que celle-ci est prise en charge par le mobile 11, qui assure un positionnement beaucoup plus précis. Les pions 21, 21' peuvent donc être sensiblement plus courts. La même remarque pourrait valoir pour les pions 18, 18', mais ceux-ci ne font pas partie de la chaîne de cotes critique. Ils peuvent donc sans inconvénient être identiques aux pions 17, 17'.

– les jeux qui intéressent le convoyeur sont fixés à 1 mm, car le plan du convoyeur n'est pas forcément très précis. Au contraire, le jeu au-dessus des pions 21, 21' est limité à 0,5 mm, car il intéresse également le mobile 11 en position haute, position qui peut être considérée comme précise.

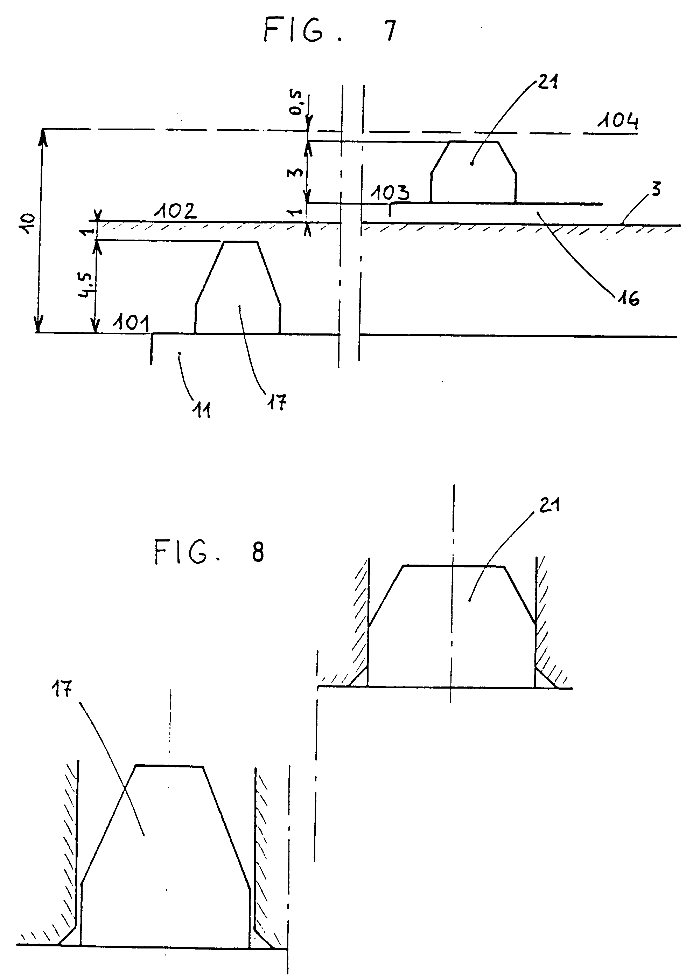

Tous ces éléments géométriques sont illustrés par la figure 7 dans laquelle les plans caractéristiques du dispositif portent les repères suivants :

– 101 est le plan actif du mobile 11 en position basse

– 102 est le plan du convoyeur

– 103 est le plan de pose du support 16

– 104 est le plan actif du mobile 11 en position haute.

La figure 8 montre les silhouettes des pions 17 et 21, avec leur engagement dans les palettes. Un jeu plus important est ménagé entre la palette et le pion 17, ceci pour éviter que le guidage des pions 17, 17' ne vienne contrarier celui des pions 21, 21' lors de la dépose des palettes sur le support 16, la meilleure précision étant bien entendu réservée aux pions 21, 21'.

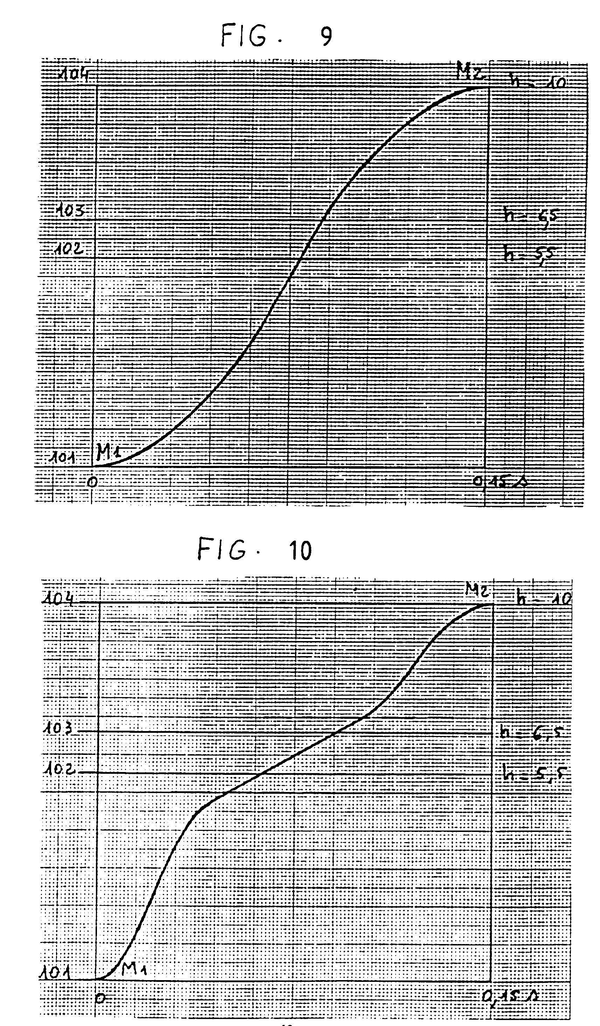

La figure 9 représente le diagramme espace-temps du mobile 11 lors de sa course de montée P1 → P2 dans un fonctionnement usuel. On retrouve sur ce diagramme, les courses en ordonnées avec le positionnement des différents plans caractéristiques 101 - 102 - 103 - 104. Les points M1 et M2 correspondent respectivement aux positions P1 et P2 du mobile, M1 étant pris conventionnellement comme origine des coordonnées. Les coordonnées de M2 sont donc :

t = 0,15 s       h = 10 mm

Dans une cinématique classique, le passage de M1 à M2 se fera selon une fonction espace-temps du type à accélération constante correspondante à 2 arcs de parabole inversés ou encore du type sinusoïdal. La courbe représentée sur la figure 9 est du type parabolique, mais une courbe du type sinusoïdal aurait une allure peu différente. Si on calcule les données cinématiques intéressantes, on obtient :

– accélérations : 1,78 m/s2 (ou 0,18 g)

– vitesse d'impact sur convoyeur : 0,127 m/s (plan 102)

– vitesse d'impact sur support 16 : 0,109 m/s (plan 103).

L'accélération est très modérée. Par contre, les vitesses d'impact sont élevées, du fait que les plans 102 et 103 se situent non loin de la mi-course. On peut craindre de ce fait des effets de chocs dangereux pour la stabilité du produit.

Une amélioration selon l'inventionest représentée par la figure 10. En mettant à profit le fait qu'on peut augmenter les accélérations, on fait apparaître au voisinage des plans 102 et 103 une zone à vitesse réduite. En fait, cette zone a été étendue légèrement de part et d'autre des plans 102 et 103, pour tenir compte d'éventuelles imprécisions (0,5 mm de chaque côté).

Les données cinématiques deviennent par exemple :
– accélération au voisinage de M2 = 3,55 m/s2 (ou 0,36 g)
– vitesse d'impact = 0,038 m/s (plans 102 et 103).

Les autres accélérations sont plus élevées, mais ne sont pas génératrices de risques.

Il est facile de voir qu'en admettant une accélération au début et une décélération en fin de course plus élevées, 0,36 g au lieu de 0,18, on peut réduire considérablement les vitesses d'impact en l'occurrence dans un rapport de 3,3 environ, ce qui diminue considérablement les phénomènes de chocs.

Un deuxième niveau d'amélioration est représenté par la figure 11. Par rapport au cas précédent, la course verticale du mobile a été augmentée de 2 mm vers le haut et de 2 mm vers le bas, ces courses complémentaires étant effectuées avant et après le créneau de temps théorique de 0,15 s. Les points M1 et M2 n'ayant pas changé, le débattement vertical utile, c'est-à-dire intéressant les plans compris entre 101 et 104, se présente comme précédemment. Par contre, l'augmentation de la course verticale totale à la fois dans le temps et dans l'espace, permet d'élargir la plage à vitesse réduite, tout en contrôlant mieux les accélérations.

Les données cinématiques deviennent :
– accélération au voisinage de M2 et M4 = 2,84 m/s2 (ou 0,29 g)
– vitesse d'impact = 0,024 m/s (plans 102 et 103).

Les paramètres critiques sont donc nettement améliorés. Quant à l'augmentation de la course totale à 14 mm, elle ne comporte pas d'inconvénient notable.

On trouve également sur la figure 11 une représentation de ce que pourrait être un diagramme espace-temps optimisé dans le cas où on supprime le décalage entre les plans du convoyeur 102 et du support fixe 103. La zone à vitesse modérée peut alors être limitée à la plage d'imprécision, qui peut être évaluée à 1 mm environ. Les accélérations n'étant pas modifiées, on arrive au diagramme tracé en pointillé qui fait aparaître une vitesse d'impact encore réduite, à savoir environ 0,015 m/s, chiffre qui pourrait encore être réduit par une meilleure maîtrise de la précision générale du système.

Sur le plan de la réalisation, l'obtention de courbes telles que décrites sur les figures 10 et 11 ne pose pas de problème si on utilise une came. On peut également les réaliser par des jeux d'articulations, mais d'une façon plus approximative et au prix d'une plus grande complexité.

Le mouvement qui vient d'être décrit est la montée P1 → P2, mais le mouvement de descente P3 → P4 peut être exactement similaire, les plans 102 et 103 se présentant au même niveau et les effets étant identiques.

Les mouvements horizontaux peuvent, en première analyse, être limités aux créneaux théoriques de 0,35 s. Dans le cas des figures 9 et 10, il y a alors une succession parfaite des quatre mouvements, sans aucun chevauchement. Le cycle est parfaitement rectangulaire. Dans le cas de la figure 11, par contre, il y a recouvrement entre la fin d'un mouvement vertical et le début d'un mouvement horizontal. Le cycle n'est plus parfaitement rectangulaire, mais présente des arrondis tels que représentés sur la figure 12. Par contre, les points P1 - P2 - P3 - P4 sont toujours respectés.

Il est intéressant d'évaluer les accélérations horizontales conduisant à un déplacement horizontal de 150 mm en 0,35 s. En faisant l'hypothèse des accélérations constantes, on arrive à un chiffre de 4,9 m/s2 (0,5 g), ce qui constitue une valeur admissible, les accélérations horizontales étant moins dangereuses que les accélérations verticales.

Ce chiffre peut être également amélioré si on admet un chevauchement complémentaire des mouvements verticaux et horizontaux, mais cette fois en empiétant sur le temps affecté au mouvement vertical. Ce chevauchement est illustré par la figure 11 bis qui est une courbe espace-temps de la fin et du début du mouvement horizontal, de part et d'autre d'une course verticale. Ce diagramme se lit avec une échelle de temps commune avec la figure 11. Si on admet des chevauchements de 0,015 s, la durée disponible pour le mouvement horizontal devient 0,38 s, et le calcul de l'accélération donne 4,15 m/s2 (0,46 g).

Dans ce dernier cas, le cycle est toujours rectangulaire arrondi, mais on ne passe plus exactement par les points P1 - P2 - P3 - P4, mais légèrement à l'intérieur, de la manière représentée à la figure 13. Cela reste acceptable dans la mesure où ce décalage n'est pas trop important, et reste compatible avec la sécurité dans l'engagement et le dégagement des pions de centrage par rapport aux trous des palettes. Cette condition est largement réalisée avec le diagramme de la figure 11 bis.

Il est bien entendu possible de faire apparaître des différences entre les chevauchements horizontaux, par exemple en admettant une sécurité moins importante lors du dégagement des pions que lors de leur engagement ; ou encore de prévoir un chevauchement plus important sur le mouvement P4 → P1 que sur le mouvement P1 → P2, mais les avantages qu'on peut en attendre sont toujours moindres.

Les améliorations précitées constituent des progrès technologiques indispensables à la maîtrise de l'application de ce type de dispositif à des cadences de fonctionnement élevées, et pour des produits fragiles tels que des objets en cours d'assemblage. A côté de la sécurité d'exploitation, une autre retombée intéressante se situe dans le domaine du bruit, qui est directement lié aux vitesses d'impact entre les palettes et les pièces mécaniques avec lesquelles elles sont en contact. Les indications chiffrées données dans la précédente description ne le sont qu'à titre indicatif et, certaines dispositions constructives peuvent être modifiées sans sortir du cadre des revendications, par exemple : le centrage par pions cylindroconiques peut être réalisé par tout autre élément mécanique approprié et la disposition relative dans le sens transversal des supports fixe et mobile et du ou des convoyeurs, peut être modifiée.

**Revendications**

1. Système de production à dispositif rapide d'amenage, de positionnement et d'enlèvement de produits (1) pour des équipements automatisés desservis par des convoyeurs (3) de transfert libre, notamment un convoyeur amont et un convoyeur aval, entre lesquels est inséré ledit dispositif (6) d'amenage, de positionnement et d'enlèvement, qui comporte un support mobile (11) actionné par un mécanisme d'actionnement à moteur électrique (13) d'entraînement, pour effectuer un cycle rectangulaire à pas de pèlerin, comprenant une course verticale (P1, P2) de prise en charge du produit (1) à traiter, amené à un rythme aléatoire par le convoyeur amont, une course horizontale (P2, P3) d'amenée du produit, une course verticale (P3, P4) de positionnement du produit en un emplacement prédéterminé de traitement (10) et une course horizontale de retour (P4, P1), ledit mécanisme d'actionnement comportant des cames de transformation du mouvement rotatif du moteur (13) en des mouvements linéaires correspondant auxdites courses verticale et horizontale, ledit système comportant de plus plusieurs dispositifs de manipulation (9) pour effectuer des insertions, des opérations ou des traitements sur le produit positionné par ledit dispositif (6) d'amenage, de positionnement et d'enlèvement, successivement en regard desdits dispositifs de manipulation, chaque dispositif de manipulation comportant un mécanisme à came (9) entraîné par un moteur électrique, et ledit système comportant un système électrique de pilotage pour synchroniser par des moyens électriques le fonctionnement des moteurs des dispositifs de manipulation et du moteur électrique (13) d'actionnement du dispositif d'amenage, de positionnement et d'enlèvement pour effectuer lesdites manipulations pendant la course horizontale de retour dudit cycle à pas de pèlerin, ledit système de pilotage permettant une commande individuelle des différents dispositifs de manipulation.

2. Système selon la revendication 1, caractérisé en ce que le support mobile (11) décrivant le cycle rectangulaire (P1-P4) a une position d'attente située au voisinage du début de la course verticale amont (P1-P2) du cycle, position dans laquelle il s'immobilise si aucun produit (1) à traiter ne se trouve audit emplacement de prise en charge (7), et que cet arrêt ne se produit pas si les produits sont approvisionnés à un débit suffisant par le convoyeur (3) amont, le dispositif (6) à pas de pèlerin fonctionnant alors de façon ininterrompue, le renouvellement desdits produits ayant le temps de s'effectuer pendant le cycle dudit dispositif (6).

3. Système selon la revendication 1 ou 2, caractérisé en ce qu'il comporte un capteur d'identification (27) permettant d'identifier tout produit (1) ou palette (2) portant le produit qui se présente, et d'envoyer l'information au système de pilotage de l'ensemble, lequel donnera au moment voulu l'ordre d'action seulement à celui ou ceux des dispositifs de manipulation (9.1 à 9.6) concernés par la variante de produit portée par la palette.

4. Système selon l'une quelconque des revendications précédentes, notamment pour un assemblage à très grande cadence, caractérisé en ce que les accélérations et décélérations du support mobile (11) pendant la course verticale (P1 - P2) de prise en charge du produit, la course horizontale (P2 - P3) d'amenée du produit, la course verticale (P3 - P4) de positionnement du produit et la course horizontale (P4 - P1) de retour, sont modulées de façon à limiter les chocs exercés sur le produit et susceptibles de déplacer les composants du produit en cours d'assemblage.

5. Système selon la revendication 4, caractérisé en ce que les mouvements verticaux (P1 - P2 ; P3 - P4) comportent des surcourses de part et d'autre des points théoriques (P1 - P2 ; P3 - P4) du cycle rectangulaire, ces surcourses étant en chevauchement dans le temps avec le début et la fin des mouvements horizontaux (P2 - P3 ; P4 - P1) pour augmenter la durée de la phase intermédiaire sans être obligé de réduire celle de la phase précédente et de la phase suivante, et permettre une réduction, à la fois de la vitesse verticale du support mobile (11) dans la phase intermédiaire d'accostage ou de dépose, et/ou de l'accélération négative dans la partie supérieure des mouvements verticaux.

6. Système selon la revendication 5, caractérisé en ce que le temps alloué aux mouvements horizontaux (P2 - P3 ; P4 - P1) est majoré par empiètement sur le créneau de temps alloué aux mouvements verticaux (P1 - P2 ; P3 - P4), en vue de diminuer les accélérations rencontrées lors desdits mouvements horizontaux.

7. Système selon la revendication 4,5 ou 6, caractérisé en ce que le plan du ou des convoyeurs (3) d'alimentation et d'évacuation du produit, et le plan du support fixe (16), sont situés au même niveau, en vue d'obtenir une possibilité de réduction plus importante de la vitesse verticale du support mobile (11) dans la phase intermédiaire d'accostage ou de dépose.

8. Système selon l'une quelconque des revendications précédentes, caractérisé en ce que les convoyeurs d'alimentation et d'évacuation sont distincts, et n'intéressent pas la zone de travail où se situe le support fixe (16).

9. Système selon l'une quelconque des revendications précédentes, caractérisé en ce que le convoyeur commun d'alimentation et d'évacuation présente dans la zone de travail un tronçon abaissé par rapport aux zones amont et aval.

**Patentansprüche**

1. Fertigungseinrichtung mit einem System zur schnellen Beschickung, Entnahme und Positionierung von Werkstücken (1) in automatisierten Bearbeitungsstationen mit freien Materialtransfersystemen (3), insbesondere einem An- und einem Abtransportsystem, zwischen denen das genannte System zur Beschickung, Entnahme und Positionierung von Werkstücken (6) auf einem beweglichen Gestell (11) angeordnet ist, das über einen Antriebsmechanismus mit Elektromotor (13) angetrieben wird und einen rechteckförmigen Pilgerschrittzyklus mit einer vertikalen Bewegung (P1, P2) zur Aufnahme des zu bearbeitenden und durch das Antransportsystem in freier Folge herangeführten Werkstücks (1), einer horizontalen Bewegung (P2, P3) für die Zufuhr des Werkstücks zur Bearbeitungsstation, einer vertikalen Bewegung (P3, P4) zur Positionierung des Werkstücks in eine bestimmte Bearbeitungsstellung (10) und einer horizontalen Rücklaufbewegung beschreibt, wobei der genannte Antriebsmechanismus mit einem Kurvengetriebe zur Umwandlung der Drehbewegung des Motors (13) in die den genannten horizontalen und vertikalen Verfahrwegen entsprechenden geradlinigen Bewegungen ausgestattet ist, die genannte Fertigungseinrichtung über mehrere Handhabungseinrichtungen (9) verfügt, die nacheinander an den vom genannten System zur Beschickung, Entnahme und Positionierung (6) bereitgestellten Werkstücken bestimmte Montage-, Verfahrens- und Bearbeitungsschritte ausführen, jede Handhabungseinrichtung (9) mit einem über einen Elektromotor angetriebenen Kurvenmechanismus ausgerüstet ist und die genannte Fertigungseinrichtung über eine Elektrosteuerung zur Synchronisation der Motoren der Handhabungseinrichtungen mit dem Antriebsmotor (13) des Systems zur Beschickung, Entnahme und Positionierung von Werkstücken verfügt, derart daß die genannten Handhabungsschritte während der horizontalen Rücklaufbewegung des Pilgerschrittzyklus ausgeführt werden und die genannte Steuerung jede Handhabungseinrichtung individuell ansteuern kann.

2. Fertigungseinrichtung nach Anspruch 1, dadurch gekennzeichnet, daß das den Rechteckzyklus (P1-P4) beschreibende bewegliche Gestell (11) in einer Warteposition kurz vor Beginn der vertikalen Aufnahmebewegung (P1-P2) verharrt, wenn sich kein Werkstück (1) am betreffenden Aufnahmeplatz (7) befindet, und diese Warteposition übergeht, wenn vom Transportsystem (3) Werkstücke in ausreichender Menge herangeführt werden, wobei im letzten Fall der Pilgerschrittzyklus des Systems (6) nicht unterbrochen wird, da der Teilenachschub innerhalb der Zykluszeit erfolgen kann.

3. Fertigungseinrichtung nach Anspruch 1 oder 2, dadurch gekennzeichnet, daß diese mit einem Meßfühler zur Teileidentifikation (27) ausgestattet ist, mit dem das jeweilige Werkstück (1) bzw. die als Werkstückträger dienende Palette (2) identifiziert und die Informationen an die Zentralsteuerung der Anlage weitergeleitet werden können, die dann zum gewünschten Zeitpunkt den Steuerbefehl nur an die für das jeweilige Werkstück zuständigen Handhabungseinrichtungen (9.1 bis 9.6) weiterleitet.

4. Fertigungseinrichtung nach einem der Ansprüche 1 bis 3, insbesondere bei Anlagen mit sehr kurzen Taktzeiten, dadurch gekennzeichnet, daß die Beschleunigungen und Verzögerungen des beweglichen Gestells (11) während der vertikalen Aufnahmebewegung (P1-P2), der horizontalen Zuführbewegung (P2-P3), der vertikalen Positionierbewegung (P3-P4) und der horizontalen Rücklaufbewegung (P4-P1) so bemessen sind, daß die auf die Werkstücke ausgeübten Stoßkräfte begrenzt werden und so ein Verschieben der gerade im Zusammenbau befindlichen Einzelteile verhindert wird.

5. Fertigungseinrichtung nach Anspruch 4, dadurch gekennzeichnet, daß die Vertikalbewegungen (P1-P2; P3-P4) an beiden theoretischen Endpunkten (P1-P2; P3-P4) des Rechteckzyklus einen mit dem Beginn bzw. Ende der Horizontalbewegungen (P2-P3; P4-P1) zeitlich überlappenden Zusatzhub aufweisen, um die mittlere Bewegungsphase zu verlängern, ohne die vorausgehende bzw. nachfolgende Phase verkürzen zu müssen, sowie eine Reduzierung der Vertikalgeschwindigkeit des beweglichen Gestells (11) in der mittleren Ankopplungs- bzw. Ablagephase und(oder der Verzögerung im oberen Bereich der Vertikalbewegungen zu ermöglichen.

6. Fertigungseinrichtung nach Anspruch 5, dadurch gekennzeichnet, daß die den Horizontalbewegungen (P2-P3; P4-P1) zugeordnete Zeitspanne durch Überlappung mit der den Vertikalbewegungen (P1-P2; P3-P4) zugeordneten Zeitspanne verlängert wird, um so die während der genannten Horizontalbewegungen auftretenden Beschleunigungen zu reduzieren.

7. Fertigungseinrichtung nach einem der Ansprüche 4 bis 6, dadurch gekennzeichnet, daß das Transportsystem bzw. die Transportsysteme (3) zum An- und Abtransport der Werkstücke und das feststehende Gestell (16) in der gleichen waagerechten Ebene liegen, um so eine stärkere Reduzierung der Vertikalgeschwindigkeit des beweglichen Gestells (11) in der mittleren Ankopplungs- bzw. Ablagephase zu erreichen.

8. Fertigungseinrichtung nach einem der vorausgehenden Ansprüche, dadurch gekennzeichnet, daß An- und Abtransport der Werkstücke durch getrennte Transportsysteme erfolgen, die außerhalb des Arbeitsraums mit dem darin befindlichen feststehenden Gestell (16) angeordnet sind.

9. Fertigungseinrichtung nach einem der vorausgehenden Ansprüche, dadurch gekennzeichnet, daß das gemeinsame Transportsystem für den An- und Abtransport der Werkstücke im Bereich des Arbeitsraums abgesenkt ist.

## Claims

1. A production system with a high-speed lift and carry device (1) for automated equipment supplied by free transfer conveyors (3), notably an upline conveyor and a downline conveyor, between which said lift and carry device (6) is inserted, the latter comprising a mobile support (11) actuated by an actuating mechanism with an electric drive motor (13), to perform a rectangular walking beam cycle, comprising a vertical travel (P1, P2) picking up the product (1) to be processed, carried at a random speed by the upline conveyor, a horizontal travel (P2, P3) carrying the product, a vertical travel (P3, P4) placing the product at a predetermined processing location (10) and a horizontal return travel (P4, P1), said actuating mechanism comprising cams transforming the rotary movement of the motor (13) into linear movements corresponding to said vertical and horizontal travels, said system comprising in addition several handling devices (9) to perform insertions, operations or processings on the product placed by said lift and carry device (6), successively opposite said handling devices, each handling device comprising a cam mechanism (9) driven by an electric motor, and said system comprising an electrical control system to synchronize by electrical means operation of the handling device motors and of the electric motor (13) actuating the lift and carry device to perform said handlings during the horizontal return travel of said walking beam cycle, said control system enabling individual control of the different handling devices.

2. The system according to claim 1, characterized in that the mobile support (11) describing the rectangular cycle (P1-P4) has a standby position situated close to the beginning of the upline vertical travel (P1-P2) of the cycle, a position in which it stops if there is no product (1) to be processed at said pick-up point (7), and that this stopping does not take place if the products are fed at a sufficient rate by the upline conveyor (3), the walking beam device (6) then operating without interruption, renewal of said products having the time to be accomplished during the cycle of said device (6).

3. The system according to claim 1 or 2, characterized in that it comprises an identification sensor (27) identifying any product (1) or palette (2) bearing the product which arrives, and sending the information to the control system of the assembly, which will give the action order in due time only to the handling device or devices (9.1 to 9.6) concerned by the version of the product carried by the palette.

4. The system according to any one of the above claims, notably for a very high production rate assembly, characterized in that the accelerations and decelerations of the mobile support (11) during the vertical product pick-up travel (P1-P2), the horizontal product carrying travel (P2-P3), the vertical product placing travel (P3-P4) and the horizontal return travel (P4-P1), are modulated in such a way as to limit the impacts exerted on the product and liable to displace the components of the product in the course of assembly.

5. The system according to claim 4, characterized in that the vertical movements (P1-P2 ; P3-P4) comprise overtravels on both sides of the theoretical points (P1-P2 ; P3-P4) of the rectangular cycle, these overtravels overlapping in time with the beginning and end of the horizontal movements (P2-P3 ; P4-P1) to increase the duration of the intermediate phase without having to reduce that of the previous phase and of the following phase, and to enable the vertical speed of the mobile support (11) in the intermediate contact or placing phase, and/or the negative acceleration in the top part of the vertical movements, to be reduced.

6. The system according to claim 5, characterized in that the time allocated for the horizontal movements (P2-P3 ; P4-P1) is increased by encroaching on the amount of time allocated to the vertical movements (P1-P2 ; P3-P4), with a view to decreasing the accelerations encountered during said horizontal movements.

7. The system according to claim 4, 5 or 6, characterized in that the plane of the product feed and removal conveyor or conveyors (3), and the plane of the fixed support (16) are situated at the same level, with a view to obtaining a greater possibility of reducing the vertical speed of the mobile support (11) in the intermediate contact or placing phase.

8. The system according to any one of the above claims, characterized in that the feed and removal conveyors are distinct and are not involved in the working area where the fixed support (16) is situated.

9. The system according to any one of the above claims, characterized in that the common feed and removal conveyor has in the working area a lowered section with respect to the upline and downline areas.

# FIG. 1

# FIG. 2

# FIG. 3

# FIG. 4

P2 $\longrightarrow$ P3

$\uparrow$             $\downarrow$

P1    $\longleftarrow$    P4

# FIG. 5

TRANSFERT
PALETTE

P2   P3

AMENAGE

P1     P4     P1

POSE    PRISE

MANIPULATEUR

Cycle

0             1 s             2 s

# FIG. 6

FIG. 7

FIG. 8

## FIG. 9

## FIG. 10

FIG. 11

FIG. 11 bis

FIG · 12

FIG · 13